# FASCICULE DE BREVET EUROPEEN

(11) **EP 1 250 677 B1**
(45) Date de publication et mention de la délivrance du brevet: **25.02.2004**
(21) Numéro de dépôt: 00951588.3
(22) Date de dépôt: 14.06.2000
(51) Int. Cl.: G01S 13/76, G06K 7/00

(54) **DISPOSITIF DE REPERAGE ET DE LOCALISATION D'OBJETS**
VORRICHTUNG ZUR ORTUNG UND LOKALISIERUNG VON GEGENSTÄNDEN
DEVICE FOR TRACKING AND LOCATING OBJECTS

(30) Priorité: 15.06.1999 FR 9907857
(43) Date de publication de la demande: 23.10.2002
(73) Titulaire: Josserand, Marie Renée, 38500 la Buisse (FR)
(72) Inventeur: Josserand, Marie Renée, 38500 la Buisse (FR)
(74) Mandataire: Hecke, G.
(86) Numéro de dépôt international: PCT/FR2000/001654
(87) Numéro de publication internationale: WO 2000/077536

(56) Documents cités:
- EP-A- 0 573 320
- EP-A- 0 794 507
- FR-A- 2 701 142
- US-A- 5 528 232

## Description

### Domaine technique de l'invention

L'invention se rapporte à un système de repérage et de localisation d'objets disposés dans un espace de rangement, comportant :
- un transpondeur associé à chaque objet, muni d'un code d'identification de l'objet associé,
- des moyens de repérage aptes à localiser un transpondeur donné à partir d'un signal émis par ce transpondeur,
- un système d'indication physiquement indépendant des objets à repérer et des transpondeurs, et muni d'organes d'indication répartis dans l'espace de rangement.

### Etat de la technique

Le problème de la recherche d'un objet parmi d'autres dans un espace de rangement, a donné lieu à de nombreux dispositifs mettant en oeuvre des méthodes de repérage et de localisation variées. La plupart des procédés consiste à ranger les objets selon des règles préétablies, afin de pouvoir les extraire en appliquant la même méthodologie.

L'introduction de dispositifs électroniques de lecture d'étiquettes passives a permis d'améliorer considérablement la fiabilité des systèmes de rangement, l'étiquette la plus répandue étant aujourd'hui l'étiquette à "code à barres". Mais de tels dispositifs ne dispensent pas d'appliquer une méthodologie préliminaire rigoureuse de classement.

Plus récemment, la technologie a rendu possible la mise en oeuvre d'étiquettes à transpondeur actif. On appellera ici transpondeur, tout récepteur émetteur répondant automatiquement à un signal extérieur en provenance d'une balise émettrice. Le transpondeur est dit actif lorsqu'il embarque ou emmagasine l'énergie suffisante pour son fonctionnement. Le document FR-A-2701142 décrit un système de ce type, destiné à l'identification, la recherche et la signalisation d'objets déposés de manière aléatoire dans un espace de rangement. Chaque objet est muni d'une étiquette comportant un capteur de signaux infrarouges, un circuit logique de comparaison des signaux captés avec un signal de référence stocké dans une mémoire, et un émetteur lumineux commandé par le circuit logique. En réponse à un signal de recherche émis par une balise de recherche, l'étiquette correspondante indique sa position en émettant un signal lumineux permettant à une personne de la localiser. Selon une variante de ce type de système, décrite dans le document EP-A-0 794 507, l'étiquette se manifeste par l'émission d'un son.

Par leur principe même, ces technologies nécessitent des étiquettes sophistiquées, donc onéreuses, embarquant ou emmagasinant l'énergie suffisante pour se manifester aux sens humains. Pour s'affranchir des inconvénients propres aux étiquettes actives, ont été développées des étiquettes à transpondeur passif. Le transpondeur est dit passif lorsque sa partie réceptrice est apte non seulement à réceptionner le signal de la balise, mais également à tirer de ce signal l'énergie nécessaire au fonctionnement du transpondeur. Naturellement, le signal émis par une étiquette de ce type est beaucoup moins puissant que celui que peut émettre un transpondeur actif, de sorte qu'il est difficile de prévoir l'émission par l'étiquette d'un signal directement perceptible par une personne, du moins à une distance importante. C'est la raison pour laquelle les systèmes de localisation mettant en oeuvre des transpondeurs passifs disposent de balises de réception des signaux des transpondeurs, et d'un interface de lecture indiquant les coordonnées de l'objet portant l'étiquette correspondant aux critères de recherche. Le document EP-A-0 794 507 décrit un système portatif comportant la balise d'émission, la balise de réception et l'interface, ce dernier émettant un signal sonore ou visuel variant avec la distance séparant l'interface du transpondeur, de manière à guider la personne qui tient l'interface dans sa recherche de l'objet portant l'étiquette. Dans une variante de réalisation décrite dans le même document, le dispositif comporte des marqueurs de localisation, munis d'une source d'énergie et d'un récepteur, et répartis dans le local où se trouvent les objets à rechercher. Lorsque le transpondeur passif lié à l'objet recherché émet un signal, les marqueurs se trouvant à son voisinage reçoivent ce signal et émettent un son permettant à la personne de localiser la partie du local où se trouve l'objet recherché. Il est même prévu que les marqueurs transmettent au système portatif une information indiquant la distance entre le marqueur et le transpondeur.

Un tel dispositif n'est pas sans poser quelques problèmes de mise en oeuvre. En premier lieu, si la puissance du signal émis par le transpondeur passif est mal adaptée, il est possible qu'il active plusieurs marqueurs placés à son voisinage, voire tous les marqueurs situés dans le local, ce qui ôte toute pertinence à l'information transmise, ou bien au contraire qu'il n'en active aucun. En pratique, ces risques imposent des plages de fonctionnement étroites pour les transpondeurs et les marqueurs, plages d'autant plus difficiles à respecter que les transpondeurs passifs sont tributaires pour leur énergie de la puissance du signal électromagnétique fourni par la balise d'émission intégrée au dispositif d'interrogation portatif, distance qui varie elle-même avec la distance séparant la balise du transpondeur.

En conséquence, la disposition des balises et des marqueurs par rapport aux transpondeurs doit être particulièrement étudiée de manière à répondre à certains critères spatiaux, ce qui impose des contraintes inutiles quant à la disposition des objets dans l'espace de rangement. De plus, chaque marqueur doit disposer d'un dispositif de traitement des signaux en provenance des transpondeurs passifs, qui soit suffisamment sophistiqué pour effectuer une discrimination entre les signaux en provenance d'étiquettes proches et les signaux en provenance d'étiquettes éloignées, d'où un coût élevé.

D'une manière plus générale, le dispositif a l'inconvénient de réunir matériellement les moyens de réception des signaux émis par les étiquettes aux moyens de signalisation sonore ou visuelle. Or la densité spatiale et la localisation nécessaires pour remplir la fonction de localisation de l'étiquette est généralement sans rapport avec celle nécessaire à sa signalisation. Si par exemple un algorithme de radiogoniométrie est appliqué, il est possible dans certaines conditions de déterminer une position dans un plan à partir de trois récepteurs, avec une résolution spatiale excellente à l'intérieur du triangle formé par les récepteurs. Si l'on ne dispose pas de moyens de visualisation sonore ou visuelle répartis à l'intérieur du triangle constitué par les trois récepteurs, avec une densité correspondant à la résolution spatiale des la localisation, on perd une partie importante de l'information.

En d'autres termes, les marqueurs réalisent un mauvais compromis entre les besoins de localisation et les besoins de signalisation.

### Objet de l'invention

L'invention vise à permettre la localisation d'objets porteurs de transpondeurs, dans un local de dimensions quelconques, de manière simple et compatible à la fois avec la technologie des transpondeurs actifs et des transpondeurs passifs.

Selon l'invention, ce problème est résolu grâce à un système de repérage et de localisation d'objets disposés dans un espace de rangement, comportant :
- un transpondeur associé à chaque objet, muni d'un code d'identification de l'objet associé,
- des moyens de repérage aptes à localiser un transpondeur donné à partir d'un signal émis par ce transpondeur,
- un système d'indication physiquement indépendant des objets à repérer et des transpondeurs, et muni d'organes d'indication répartis dans l'espace de rangement,
et qui comporte en outre
- une base de données permettant de déterminer, pour chaque emplacement dans l'espace de rangement, un ou plusieurs desdits organes d'indication situés à proximité dudit emplacement,
- des moyens de commande aptes à interroger les moyens de repérage sur l'emplacement d'un transpondeur correspondant à un code d'identification donné, à consulter la base de données pour déterminer le ou lesdits organes d'indication correspondant à l'emplacement déterminé par les moyens de repérage et à activer le ou lesdits organes d'indication situés à proximité.

L'expression "physiquement indépendant" signifie que matériellement, l'emplacement du système d'indication ne varie pas lorsque sont déplacés les objets dans l'espace de rangement.

De préférence, la base de données permet de déterminer, pour chaque emplacement dans l'espace de rangement, un ou plusieurs desdits organes d'indication permettant de baliser un chemin d'accès jusqu'au dit emplacement et les moyens de commande sont aptes à activer le ou lesdits organes d'indication balisant un chemin d'accès entre un point prédéterminé et le ou les organes d'indication situés à proximité du transpondeur. Une telle disposition permet de localiser aisément l'objet recherché dans un espace de rangement de grandes dimensions et de structure complexe. Il permet également un repérage efficace indépendamment de la puissance du signal émis par les organes d'indication.

La flexibilité de mise en oeuvre de l'invention est accrue si le système d'indication est physiquement indépendant des moyens de repérage.

Dans son principe, et c'est là un avantage décisif, l'invention est applicable à tout type de transpondeurs, ce qui laisse une grande flexibilité dans la gestion du matériel. Naturellement, l'invention est particulièrement avantageuse lorsque les transpondeurs sont des transpondeurs passifs, puisqu'elle permet de suppléer l'insuffisance de puissance de ce type de transpondeurs, qui limite le degré de perception directement accessible aux sens humains. Dans ce cas, on prévoit que les moyens de repérage comportent des moyens d'émission d'un signal d'appel et qu'au moins l'un des transpondeurs soit un transpondeur passif muni de moyens de réception dudit signal d'appel et de moyens d'émission, les moyens de réception étant aptes à extraire du signal reçu l'énergie nécessaire à l'activation des moyens d'émission.

Préférentiellement, les moyens de repérage comportent une pluralité de balises de réception, chaque balise de réception ayant un champ de réception spatial déterminé, et les moyens de commande sont reliés aux balises de réception des moyens de repérage par l'intermédiaire d'un multiplexeur. Ceci permet de limiter la complexité du matériel constituant le système, et de regrouper certaines unités de traitement du signal, notamment la fonction modulateur-démodulateur, en amont du multiplexeur. De manière analogue, on peut prévoir que les moyens de repérage comportent une pluralité de balises d'émission, chaque balise d'émission ayant un champ de réception spatial déterminé, et que les moyens de commande soient reliés aux balises d'émission des moyens de repérage par l'intermédiaire d'un multiplexeur. Alternativement, les moyens de commande peuvent être reliés aux balises de réception et/ou d'émission des moyens de repérage par l'intermédiaire d'un réseau, offrant alors l'avantage d'une interrogation simultanée de l'ensemble des balises, donc d'une réduction de la durée de recherche dans les installations de grandes dimensions.

Préférentiellement, les signaux émis et reçus sont des signaux électromagnétiques. Les signaux peuvent être par exemple des infrarouges ou des signaux hertziens.

Le réseau de balises peut être plus ou moins dense, suivant la topographie de l'espace de rangement, la résolution spatiale recherchée et la méthode de localisation.

Diverses méthodologies peuvent être mises en oeuvre afin de déterminer la position d'un transpondeur donné par rapport aux balises. Dans le cas de signaux radiofréquence par exemple, on sait que la puissance du signal reçu par l'antenne constituant le récepteur du transpondeur est fonction de la distance entre celui-ci et l'antenne de la balise émettrice. On peut donc prévoir que le transpondeur comporte un récepteur radiofréquence, des moyens de mesure de la puissance du signal d'appel émis par la balise d'émission, et qu'il émette en réponse au signal d'appel de la balise d'émission, un signal de réponse codant la valeur de la puissance du signal d'appel tel que reçu par le transpondeur, par exemple sous forme numérique. Alternativement, la balise d'émission peut elle-même mesurer l'énergie ou la puissance du signal absorbé par le transpondeur et en déduire son éloignement, cette solution offrant l'avantage de pouvoir être mise en oeuvre avec des transpondeurs banalisés.

On peut faire également appel à une méthode de détermination de position en tout ou rien, en analysant la configuration des antennes qui "voient" ou ne "voient" pas le transpondeur.

On peut également faire appel à une méthode classique de radiogoniométrie utilisant plusieurs radiogoniomètres espacés de position connue pour déterminer la position de la source constituée par le transpondeur de l'étiquette, activé par une balise émettrice.

Suivant la résolution et la fiabilité souhaitées, on peut cumuler plusieurs des méthodes précédentes.

Le type d'organe d'indication doit être adapté à l'environnement de l'espace de rangement. Préférentiellement, les organes d'indications comportent des organes de visualisation, tels que de diodes électroluminescentes ou des écrans LCD, et/ou des organes d'émission acoustique.

### Description sommaire des dessins

D'autres avantages et caractéristiques de l'invention ressortiront de la description qui va suivre d'un mode de réalisation de l'invention, donné à titre d'exemple non limitatif et représenté aux dessins annexés sur lesquels :
- la figure 1 représente un schéma de fonctionnement de l'invention ;
- les figures 2a à 2c représentent différents modes de fonctionnement des antennes utilisées dans l'invention ;
- la figure 3 représente un deuxième mode de réalisation de l'invention.

### Description d'un mode de réalisation préférentiel

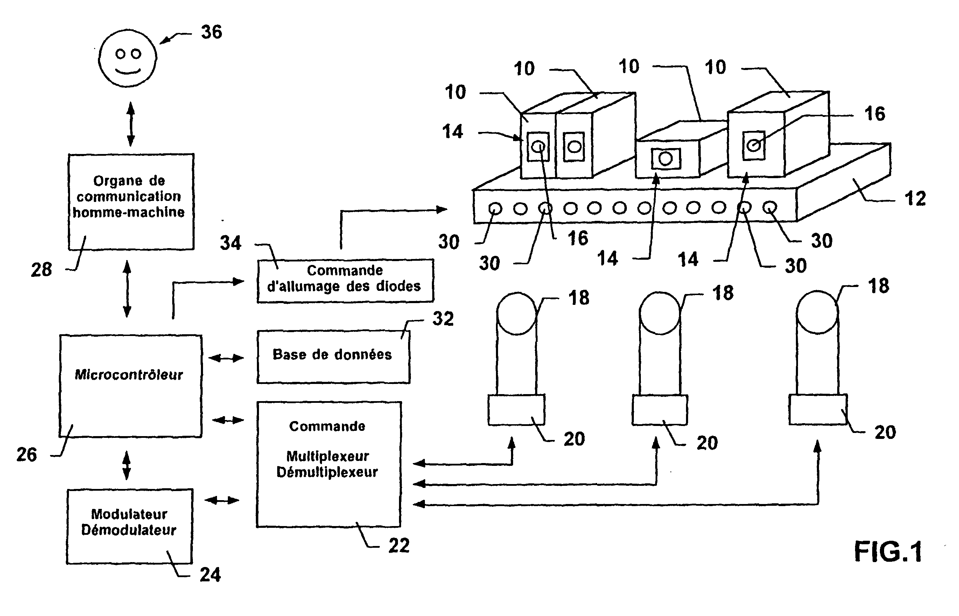

En référence à la figure 1, une collection d'objets 10 est disposée sur une étagère 12 constituant un espace de rangement.

Chaque objet est muni d'une étiquette 14 comportant un transpondeur passif 16, muni d'une antenne pouvant prendre la forme d'une bobine, et d'un code d'identification de l'objet associé. On parlera ici d'étiquette pour désigner un support matériel de forme quelconque, qui peut être matériellement fixé, de manière amovible ou non, sur l'objet auquel il est associé. Ce type d'étiquette, également dénommé "tag", est bien connue de l'homme du métier.

Des antennes 18 constituées par des bobines sont disposées de manière à balayer l'espace de rangement 12. Chacune des antennes 18 est reliée à un amplificateur adaptateur d'antenne 20.

Un modulateur démodulateur 24 est relié aux amplificateurs d'antenne 20 par l'intermédiaire d'un ensemble multiplexeur démultiplexeur 22. Le tout est piloté par un microcontrôleur 26 muni d'une interface de communication homme-machine 28.

L'étagère 12 est munie de voyants 30 à diode électroluminescentes, situés à proximité immédiate des objets à repérer 10. Au microcontrôleur 26 est associée une base de données 32 faisant correspondre à chaque voyant 30 une ou plusieurs régions de l'espace de rangement 12. Le microcontrôleur 26 pilote des moyens de commande 34 de l'allumage des voyants 30. Il n'y a pas nécessairement autant de voyants 30 que d'objets 10 puisque les voyants 30 sont physiquement indépendants des objets 10. La densité des voyants 30 sera choisie en fonction de la résolution spatiale de la localisation et des besoins de l'application. Dans certaines circonstances, il y aura plus de voyants 30 que d'objets 10, notamment lorsque certains des objets 10 rangés sont volumineux ou que l'espace de rangement est partiellement vide. Dans d'autres cas, le nombre d'objets 10 sera supérieur au nombre de voyants 30, et il restera à la personne à effectuer une recherche manuelle de l'objet 10 dans le voisinage immédiat du voyant 30. On peut d'ailleurs prévoir que tous les voyants 30 cernant la zone à l'intérieur de laquelle se trouve l'objet recherché 10, soient illuminés simultanément par le microcontrôleur 26, afin de faciliter la délimitation de la zone de recherche.

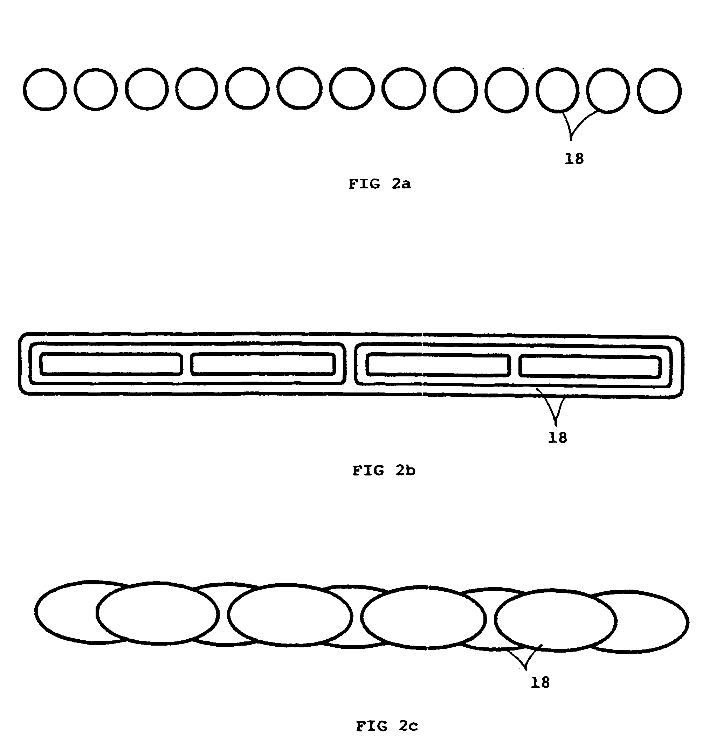

La technologie des antennes et des transpondeurs dépend des besoins de l'application. Dans les technologies utilisant par exemple la fréquence de 13.56 MHz ou 125kHz, la distance antenne-étiquette maximale va usuellement de quelques mm à environ 1 mètre. Dans la technologie à 4.5 GHz, la distance de lecture peut atteindre quelques mètres avec une étiquette active. La disposition spatiale des antennes dépend de l'application. Leurs champs d'action peuvent être totalement distincts, comme illustré par la figure 2a, ou bien se chevaucher partiellement comme illustré par la figure 2b ou bien être organisé de pour permettre une recherche dichotomique, comme illustré par la figure 2c.

La position de l'objet peut être déterminée plus ou moins précisément par diverses méthodes connues qui peuvent être utilisées alternativement ou en combinaison.

Suivant une première méthode, on détermine la position d'une étiquette 14 le long d'un axe de coordonnées en équipant chaque extrémité du tronçon concerné avec une antenne émettrice 18. Chaque antenne 18 émet successivement un champ électromagnétique dont l'amplitude sur l'axe de la bobine décroît en fonction de la distance au plan de l'antenne émettrice 18. On détermine la position de l'étiquette 14 sélectionnée donc de l'objet recherché 10 sur cet axe en analysant la variation de charge de la bobine réceptrice du transpondeur 16 vue par chacune des deux bobines.

Suivant une variante de cette méthode, les étiquettes 14 sont capables de mesurer elles-mêmes le champ induit reçu et de le communiquer à l'émetteur par voie de codage numérique.

Suivant une deuxième méthode, on dispose d'un réseau de balises ayant chacune un champ d'action donné le long d'un axe. On détermine la position de l'antenne le long d'un axe, en analysant la configuration des balises qui "voient" ou ne "voient" pas l'étiquette, par une approche en ''tout ou rien". On détermine pas à pas pour chaque balise activée successivement, si l'étiquette recherchée répond au signal de la balise, puis on détermine la position de l'étiquette à partir de la configuration des balises ayant pu communiquer avec elle.

Les procédés de localisation dans un plan peuvent être déduits des précédents, soit en découpant le plan en bandes linéaires parallèles adjacentes, soit en le découpant de manière matricielle avec deux réseaux de bandes linéaires perpendiculaires.

Le système fonctionne de la manière suivante.

Un requérant 36 fournit au microcontrôleur 26 un ordre de recherche d'un objet particulier, soit en entrant directement le code de l'objet à rechercher sur l'interface 28, soit en l'identifiant d'une manière permettant au microcontrôleur 26 de retrouver le code associé par recherche dans la base de données. Le microcontrôleur 26 active selon un protocole quelconque les antennes 18, jusqu'à identifier la ou les antennes par lesquelles a été reconnu le code recherché. Le modulateur démodulateur 24 se charge de la transformation des ordres du microcontrôleur 26 en activation analogique des antennes 18, et de la conversion des signaux analogiques reçus en signaux numériques compréhensibles par le microcontrôleur 26. Le microcontrôleur, interprète les résultats fournis par les antennes 18 et détermine par un algorithme quelconque la position de l'objet recherché, à partir des données stockées dans la base de données 32. Il avertit le requérant 36 au travers de l'interface 28 et commande l'activation du voyant 30 lumineux le plus proche de la position déterminée par l'intermédiaire de la commande d'allumage 34. Dans le cas où le recherche est infructueuse, l'interface 28 fournit un message visuel ou auditif indiquant que l'objet est introuvable.

Selon une variante de réalisation, le microcontrôleur 26 commande l'activation d'un ensemble de voyants lumineux 30 permettant de baliser un chemin d'accès entre l'organe de communication et l'objet. L'illumination des voyants peut être permanente ou bien animée de manière à provoquer une impression visuelle de défilement qui aboutit à l'objet recherché. Dans le cas où l'organe de communication homme machine 28 est lui-même mobile, il est lui-même muni d'une étiquette à transpondeur, de façon que le microcontrôleur puisse également déterminer sa position dans l'espace de rangement et commander l'activation sélective des voyants balisant le chemin allant de l'organe de communication mobile à l'objet.

La base de donnée 32 associant les voyants 30 à des zones de l'espace de rangement, peut être constituée par apprentissage si les voyants sont eux-mêmes munis d'étiquettes à transpondeur.

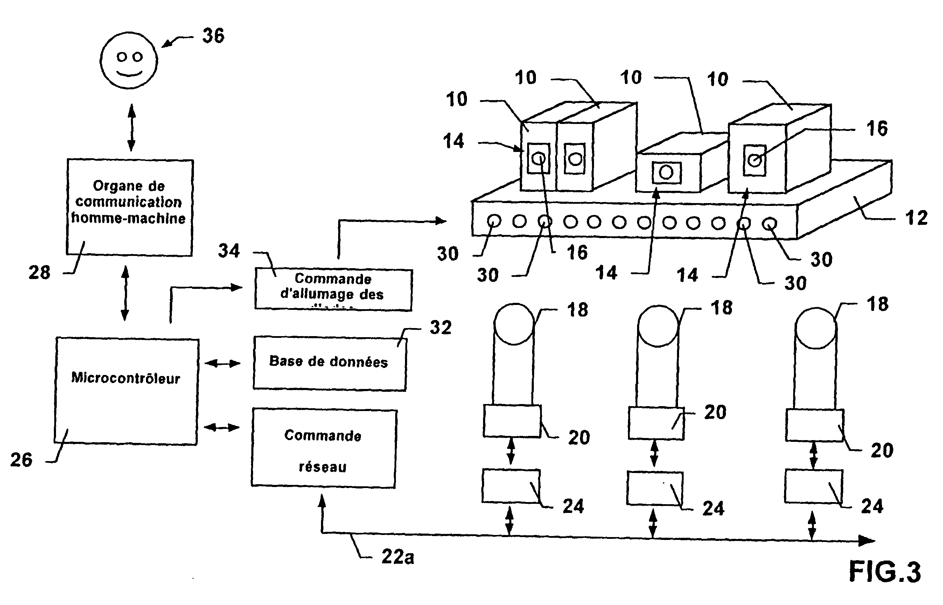

La figure 3 représente un deuxième mode de réalisation de l'invention, qui se distingue du premier par le fait que les balises 18 sont connectées en réseau par l'intermédiaire d'une commande de réseau 22a. Ceci permet naturellement une plus grande rapidité d'accès à l'information pertinente lorsque le nombre de balises augmente.

La description précédente est donnée à titre non limitatif et diverses variations sont possibles. En particulier, l'invention peut également être mise en oeuvre avec des transpondeurs actifs, dont la source d'énergie propre n'est pas utilisée pour obtenir une manifestation directe de l'étiquette, mais pour amplifier le signal émis à destination des antennes. Cette variante permet de limiter le nombre ou la sensibilité des balises d'émission et de réception.

Le système de repérage selon l'invention permet également d'accéder immédiatement au document cherché, de faciliter le rangement du document sorti, et de faciliter le classement de nouveaux documents.

Dans le cas de rangement de document connu, le système de repérage aura donc pour rôle de désigner à l'utilisateur l'endroit où le document doit être rangé. La base de donnée 32 a été renseignée à cet effet sur l'emplacement où le document à ranger a le droit de figurer, par exemple:
- le seul endroit autorisé est celui qu'occupait le dossier avant son extraction
- un algorithme de classification détermine l'endroit approprié au rangement en analysant les endroits occupés par les autres documents

Plusieurs procédures de rangement sont envisageables:
- l'utilisateur sélectionne par informatique le document à ranger,
- l'utilisateur fait identifier par le système le document à ranger en le mettant à proximité d'une boucle inductive (lecteur) spécifique ou banalisée. L'emploi d'un lecteur mobile est envisageable

Le système de localisation est capable d'effectuer l'opération inverse du repérage, en l'occurrence :
- à partir du code du document, indiquer l'emplacement où celui-ci doit être rangé,
- alerter l'utilisateur qui met le document à un endroit non approprié par un signal lumineux et /ou sonore

Dans le cas de rangement d'un document nouveau, l'utilisateur renseigne la base de donnée 32 avec les caractéristiques du document nouveau. La base de donnée 32 ou un logiciel associé choisit l'endroit où le document doit être rangé et l'indique à l'utilisateur. Le système vérifie alors que le nouveau document (reconnaissable par un code inconnu jusqu'alors) est bien introduit dans l'espace approprié.

La vérification du classement s'effectue par un contrôle permanent du système de l'état de la base de données 32, et peut avertir l'utilisateur des entrées et sorties manuelles de documents, de la cohérence du classement, des défauts constatés par exemple des codes d'étiquettes non connus, ou des erreurs de lecture anormales (pouvant anticiper un défaut de fonctionnement).

Le système de localisation selon l'invention est donc capable de localiser non seulement un document identifié par son code transpondeur, mais aussi l'emplacement où un document identifié par son code transpondeur ou autre information doit être rangé selon une logique prédéfinie.

Lorsqu'un document est déplacé, le système peut suivre le document tant qu'il reste dans le champ d'une boucle. Toutefois, en fonction de la distribution des boucles, l'utilisateur peut déduire des informations concernant la position du document, même s'il a quitté le champ des boucles. Par exemple, le passage et le sens de passage par une porte peut être déduit des positions successives de l'objet dans le champ de boucles disposées sur le passage de la porte.

Selon un développement de l'invention, des boucles d'interdiction peuvent être agencées aux portes de sortie des bibliothèques. Lorsqu'un ouvrage prêté est "sorti" de l'étagère, l'étiquette est renseignée par écriture d'une information définie. La boucle sentinelle située à la sortie du local peut donc détecter dans son champ les étiquettes non autorisées à "sortir".

Dans le cas d'étiquettes à lecture seule, l'information d'autorisation est enregistrée au niveau de l'ordinateur de gestion, et le lecteur sentinelle sert à communiquer à l'ordinateur les codes des étiquettes traversant son champ. L'ordinateur se charge alors de provoquer l'alarme s'il y a lieu.

Dans ces deux derniers exemples, on analyse les positions successives des objets par rapport à l'espace de rangement, qui est alors étendu aux espaces de circulation, ce qui permet de déduire la position probable de l'objet à chaque instant.

Une autre application est celle de la recherche d'un document égaré. Lorsqu'un dossier est absent de son logement habituel, il est parfois introuvable, car camouflé sous une pile de documents. Un lecteur mobile peut alors permettre de le localiser. Ce lecteur peut être renseigné sur le code d'identification recherché par le système de localisation via une liaison avec ou sans contact.

Les procédés de localisation décrits n'excluent pas l'emploi d'autres procédés. La localisation des étiquettes peut être effectuée par exemple par radiogonométrie à partir de trois radiogoniomètres délimitant l'espace de rangement. Les antennes d'émission et de réception peuvent être spatialement espacées.

## Revendications

1. Système de repérage et de localisation d'objets (10) disposés dans un espace de rangement, comportant :
• un transpondeur (16) associé à chaque objet (10), muni d'un code d'identification de l'objet associé,
• des moyens de repérage (18) aptes à localiser un transpondeur donné (16) à partir d'un signal émis par ce transpondeur (16),
• un système d'indication (30) physiquement indépendant des objets à repérer (10) et des transpondeurs (16), et muni d'organes d'indication (30) répartis dans l'espace de rangement,
**caractérisé en ce qu'**il comporte en outre
• une base de données (32) permettant de déterminer, pour chaque emplacement dans l'espace de rangement, un ou plusieurs desdits organes d'indication (30) situés à proximité dudit emplacement,
• des moyens de commande (26) aptes à interroger les moyens de repérage (18) sur l'emplacement d'un transpondeur (16) correspondant à un code d'identification donné, à consulter la base de données (32) pour déterminer le ou lesdits organes d'indication (30) correspondant à l'emplacement déterminé par les moyens de repérage (18) et à activer le ou lesdits organes d'indication (30) situés à proximité.

2. Système de repérage et de localisation d'objets selon la revendication 1, **caractérisé en ce que**
• la base de données (32) permet de déterminer, pour chaque emplacement dans l'espace de rangement, un ou plusieurs desdits organes d'indication permettant de baliser un chemin d'accès jusqu'au dit emplacement ;
• les moyens de commande (26) sont aptes à activer le ou lesdits organes d'indication (30) balisant un chemin d'accès entre un point prédéterminé et le ou les organes d'indication (30) situés à proximité du transpondeur (14).

3. Système de repérage et de localisation d'objets selon l'une quelconque des revendications précédentes, **caractérisé en ce que** le système d'indication est physiquement indépendant des moyens de repérage (18).

4. Système de repérage et de localisation d'objets selon l'une quelconque des revendications précédentes, **caractérisé en ce que**
• les moyens de repérage (18) comportent des moyens d'émission d'un signal d'appel;
• au moins l'un des transpondeurs (16) est un transpondeur passif muni de moyens de réception dudit signal d'appel et de moyens d'émission d'un signal de réponse, les moyens de réception étant aptes à extraire du signal reçu l'énergie nécessaire à l'activation des moyens d'émission du signal de réponse.

5. Système de repérage et de localisation d'objets selon l'une quelconque des revendications précédentes, **caractérisé en ce que**
• les moyens de repérage comportent une pluralité de balises de réception, chaque balise de réception ayant un champ de réception spatial déterminé,
• les moyens de commande sont reliés aux balises de réception des moyens de repérage par l'intermédiaire d'un multiplexeur ou d'un réseau.

6. Système de repérage et de localisation d'objets selon l'une quelconque des revendications précédentes, **caractérisé en ce que**
• les moyens de repérage comportent une pluralité de balises d'émission (18), chaque balise d'émission ayant un champ de réception spatial déterminé,
• les moyens de commande sont reliés aux balises d'émission (18) des moyens de repérage par l'intermédiaire d'un multiplexeur (22) ou d'un réseau.

7. Système de repérage et de localisation d'objets selon l'une quelconque des revendications précédentes, **caractérisé en ce que** les signaux émis et reçus sont des signaux électromagnétiques.

8. Système de repérage et de localisation d'objets selon l'une quelconque des revendications précédentes, **caractérisé en ce que** les organes d'indications (30) comportent des organes de visualisation, tels que de diodes électroluminescentes ou des écrans LCD, et/ou des organes d'émission acoustique.

9. Procédé de repérage et de localisation d'objets mettant en oeuvre un système selon les revendications 1-8, **caractérisé en ce qu'**on localise le transpondeur associé à l'objet recherché en analysant la configuration des antennes qui "voient" ou ne "voient" pas le transpondeur, par une approche en "tout ou rien".

10. Procédé de repérage et de localisation d'objets mettant en oeuvre un système selon les revendications 1-8, **caractérisé en ce qu'**on localise le transpondeur associé à l'objet recherché par mesure de l'énergie absorbée par le transpondeur.

11. Procédé de repérage et de localisation d'objets mettant en oeuvre un système selon les revendications 1-8, **caractérisé en ce qu'**on renseigne la base de données (32) sur l'emplacement où un document identifié par le code d'identification du transpondeur (16) doit être rangé selon une procédure prédéterminée.

12. Procédé de repérage et de localisation selon la revendication 11, **caractérisé en ce qu'**on sélectionne par informatique le document à ranger en fournissant un ordre de sélection au microcontrôleur (26).

13. Procédé de repérage et de localisation selon la revendication 11, **caractérisé en ce qu'**on positionne le document à ranger à proximité d'une boucle inductive spécifique des moyens de repérage (18) pour faire identifier ledit document par les moyens de commande (26).

## Claims

1. A system for tracking and locating objects (10) arranged in a storage space, comprising:
- a transponder (16) associated to each object (10), equipped with an identification code of the associated object,
- tracking means (18) able to locate a given transponder (16) from a signal emitted by this transponder (16),
- an indication system (30) physically independent from the objects to be tracked (10) and from the transponders (16) and equipped with indicating means (30) arranged in the storage space,
**characterized in that** it comprises in addition
- a database (32) enabling one or more of said indicating means (30) situated in proximity to said location to be determined for each location in the storage space,
- control means (26) able to question the tracking means (18) on the location of a transponder (16) corresponding to a given identification code, to consult the database (32) to determine said indicating means (30) corresponding to the location determined by the tracking means (18) and to activate said indicating means (30) situated in proximity thereto.

2. The system for tracking and locating objects according to claim 1, **characterized in that**
- the database (32) enables one or more of said indicating means to be determined for each location in the storage space enabling an access route to said location to be marked out;
- the control means (26) are able to activate said indicating means (30) marking out an access route between a preset point and the indicating means (30) situated near to the transponder (16).

3. The system for tracking and locating objects according to either one of the foregoing claims, **characterized in that** the indication system is physically independent from the tracking means (18).

4. The system for tracking and locating objects according to any one of the foregoing claims, **characterized in that**
- the tracking means (18) comprise means for emitting a call signal;
- at least one of the transponders (16) is a passive transponder equipped with receiving means for receiving said call signal and with emitting means for emitting a response signal, the receiving means being able to extract from the signal received the energy necessary for activation of the means for emitting the response signal.

5. The system for tracking and locating objects according to any one of the foregoing claims, **characterized in that**
- the tracking means comprise a plurality of receiver beacons, each receiver beacon having a set spatial receiving field,
- the control means are connected to the receiver beacons of the tracking means by means of a multiplexer or a network.

6. The system for tracking and locating objects according to any one of the foregoing claims, **characterized in that**
- the tracking means comprise a plurality of emitting beacons (18), each emitting beacon having a set spatial receiving field,
- the control means are connected to the emitting beacons (18) of the tracking means by means of a multiplexer (22) or a network.

7. The system for tracking and locating objects according to any one of the foregoing claims, **characterized in that** the emitted and received signals are electromagnetic signals.

8. The system for tracking and locating objects according to any one of the foregoing claims, **characterized in that** the indicating means (30) comprise display means such as light-emitting diodes or LCD screens, and/or acoustic emitting means

9. A procedure for tracking and locating objects implementing a system according to the claims 1-8, **characterized in that** the transponder associated to the searched object is located by analysing the configuration of the antennas that "see" or don't "see" the transponder, using a binary approach.

10. The procedure for tracking and locating objects implementing a system according to any one of the foregoing claims, **characterized in that** the transponder associated to the searched object is located by measuring the energy absorbed by the transponder.

11. The procedure for tracking and locating objects implementing a system according to the claims 1-8, **characterized in that** information on the location where a document identified by the identification code of the transponder (16) has to be filed is entered in the database (32) according to a preset procedure.

12. The procedure for tracking and locating according to claim 11, **characterized in that** the document to be filed is selected by software by supplying a selection order to the microcontroller (26).

13. The procedure for tracking and locating according to claim 11, **characterized in that** the document to be filed is positioned close to a specific inductive loop of the tracking means (18) to have said document identified by the control means (26).

## Patentansprüche

1. System zur Ortung und Lokalisierung von Gegenständen (10), die in einem Lagerraum angeordnet sind, das umfasst:
• ein zu jedem Gegenstand (10) gehörender Transponder (16), der mit einem Identifizierungscode des zugehörigen Gegenstands versehen ist,
• Ortungsvorrichtungen (18), die geeignet sind, einen gegebenen Transponder (16) auf der Grundlage eines von diesem Transponder (16) ausgesandten Signals zu lokalisieren,
• ein Hinweissystem (30), das physikalisch von den zu ortenden Gegenständen (10) und den Transpondern (16) unabhängig und mit Hinweiseinrichtungen (30) versehen ist, die in dem Lagerraum verteilt sind,
**dadurch gekennzeichnet, dass** es ferner umfasst:
• eine Datenbank (32), die für jede Stelle in dem Lagerraum die Bestimmung einer oder mehrerer Hinweiseinrichtungen (30) erlaubt, die sich nahe dieser Stelle befinden,
• Steuerungsmittel (26), die geeignet sind, die Ortungsvorrichtungen (18) hinsichtlich des Standorts eines Transponders (16) abzufragen, der einem gegebenen Identifizierungscode entspricht, die Datenbank (32) abzufragen, um die Hinweiseinrichtung/en (30) zu bestimmen, die dem von den Ortungsvorrichtungen (18) bestimmten Standort entsprechen, und die nahe gelegene/n Hinweiseinrichtung/en (30) zu aktivieren.

2. System zur Ortung und Lokalisierung von Gegenständen (10) nach Anspruch 1, **dadurch gekennzeichnet, dass**
• die Datenbank (32) für jeden Standort in dem Lagerraum die Bestimmung einer oder mehrerer Hinweiseinrichtungen erlaubt, die eine Kennzeichnung eines Zugangswegs zu diesem Standort ermöglichen;
• die Steuerungsmittel (26) geeignet sind, die Hinweiseinrichtung/en (30) zu aktivieren, die einen Zugangsweg zwischen einem vorbestimmten Punkt und der/den Hinweiseinrichtung/en (30) kennzeichnet/kennzeichnen, die sich nahe dem Transponder (14) befinden.

3. System zur Ortung und Lokalisierung von Gegenständen nach einem der vorstehenden Ansprüche, **dadurch gekennzeichnet, dass** das Hinweissystem physikalisch unabhängig von den Ortungsvorrichtungen (18) ist.

4. System zur Ortung und Lokalisierung von Gegenständen nach einem der vorstehenden Ansprüche, **dadurch gekennzeichnet, dass**
• die Ortungsvorrichtungen (18) Mittel zum Senden eines Datenabrufsignals umfassen;
• mindestens einer der Transponder (16) ein passiver Transponder ist, der mit Mitteln zum Empfang des Datenabrufsignals und Mitteln zum Senden eines Antwortsignals versehen ist, wobei die Mittel zum Empfang geeignet sind, aus dem empfangenen Signal die für die Aktivierung der Mittel zum Senden erforderliche Energie zu ziehen.

5. System zur Ortung und Lokalisierung von Gegenständen nach einem der vorstehenden Ansprüche, **dadurch gekennzeichnet, dass**
• die Ortungsvorrichtungen eine Mehrzahl von Empfangsmarkern umfassen, wobei jeder Empfangsmarker ein bestimmtes räumliches Empfangsfeld hat;
• die Steuerungsmittel an die Empfangsmarker der Ortungsvorrichtungen mittels eines Multiplexers oder eines Netzes geschaltet sind.

6. System zur Ortung und Lokalisierung von Gegenständen nach einem der vorstehenden Ansprüche, **dadurch gekennzeichnet, dass**
• die Ortungsvorrichtungen eine Mehrzahl von Sendemarkern (18) umfassen, wobei jeder Sendemarker ein bestimmtes räumliches Empfangsfeld hat,
• die Steuerungsmittel an die Sendemarker (18) der Ortungsvorrichtungen mittels eines Multiplexers (22) oder eines Netzes geschaltet sind.

7. System zur Ortung und Lokalisierung von Gegenständen nach einem der vorstehenden Ansprüche, **dadurch gekennzeichnet, dass** die ausgesandten und die empfangenen Signale elektromagnetische Signale sind.

8. System zur Ortung und Lokalisierung von Gegenständen nach einem der vorstehenden Ansprüche, **dadurch gekennzeichnet, dass** die Hinweiseinrichtungen (30) Mittel zur optischen Anzeige wie Lumineszenzdioden oder LCD-Bildschirme und/oder akustische Sendeeinrichtungen umfassen.

9. Verfahren zur Ortung und Lokalisierung von Gegenständen, das ein System nach einem der Ansprüche 1 bis 8 verwendet, **dadurch gekennzeichnet, dass** der zu dem gesuchten Gegenstand gehörende Transponder ermittelt wird, indem die Konfiguration der Antennen, die den Transponder "sehen" oder nicht "sehen", mittels einer "Alles-oder-Nichts"-Näherung analysiert wird.

10. Verfahren zur Ortung und Lokalisierung von Gegenständen, das ein System nach einem der Ansprüche 1 bis 8 verwendet, **dadurch gekennzeichnet, dass** man den dem gesuchten Gegenstand zugeordneten Transponder durch Messung der von dem Transponder absorbierten Energie lokalisiert.

11. Verfahren zur Ortung und Lokalisierung von Gegenständen, das ein System nach einem der Ansprüche 1 bis 8 verwendet, **dadurch gekennzeichnet, dass** man der Datenbank (32) den Platz angibt, an dem ein durch den Identifizierungscode des Transponders (16) identifiziertes Dokument nach einem vorgegebenen Verfahren abgelegt werden soll.

12. Verfahren zur Ortung und Lokalisierung von Gegenständen nach Anspruch 11, **dadurch gekennzeichnet, dass** man das abzulegende Dokument per Computer auswählt, indem man dem Microcontroller (26) eine Auswahlreihenfolge angibt.

13. Verfahren zur Ortung und Lokalisierung von Gegenständen nach Anspruch 11, **dadurch gekennzeichnet, dass** man das abzulegende Dokument nahe einer besonderen Induktionsschleife der Ortungsvorrichtungen (18) positioniert, um das Dokument durch die Steuerungsmittel (26) identifizieren zu lassen.
